# EUROPEAN PATENT SPECIFICATION

(11) **EP 2 614 614 B1**
(45) Date of publication and mention of the grant of the patent: **25.05.2016**
(21) Application number: 10784343.5
(22) Date of filing: 10.09.2010
(51) Int. Cl.: H04L 12/24, H04L 12/26, G06F 15/177

(54) **DYNAMIC CONFIGURATION OF INTERCONNECTED DEVICES FOR MEASURING PERFORMANCE CHARACTERISTICS IN A NETWORK**
DYNAMISCHE KONFIGURATION VON MITEINANDER VERBUNDENEN VORRICHTUNG ZUR MESSUNG DER LEISTUNGSEIGENSCHAFTEN IN EINEM NETZWERK
CONFIGURATION DYNAMIQUE DE DISPOSITIFS INTERCONNECTÉS POUR MESURER LES CARACTÉRISTIQUES DE PERFORMANCE DANS UN RÉSEAU

(43) Date of publication of application: 17.07.2013
(73) Proprietor: ALCATEL LUCENT, 92100 Boulogne-Billancourt (FR)
(72) Inventor: PRAKASH, Om, 560092 Bangalore (IN); PANDEY, Prashant, 5600037 Bangalore (IN)
(74) Representative: Berthier, Karine
(86) International application number: PCT/IB2010/002791
(87) International publication number: WO 2012/032373

(56) References cited:
- WO-A2-03/009086
- US-A- 5 408 618
- US-A1- 2009 113 070
- US-A1- 2009 228 611
- US-A1- 2009 328 133
- US-B1- 6 708 187
- US-B1- 7 787 380
- YANG M ET AL: "An end-to-end QoS framework with on-demand bandwidth reconfiguration", COMPUTER COMMUNICATIONS, ELSEVIER SCIENCE PUBLISHERS BV, AMSTERDAM, NL, vol. 28, no. 18, 1 November 2005 (2005-11-01), pages 2034-2046, XP025273241, ISSN: 0140-3664, DOI: DOI:10.1016/J.COMCOM.2004.07.029 [retrieved on 2005-11-01]

## Description

### TECHNICAL FIELD

The present invention relates to measurement of performance characteristics and, particularly, to measurement of performance characteristics of interconnected devices in a network.

### BACKGROUND

Present day networks employ different methods for determining the performance characteristics of the network. The performance of the network can be measured using various parameters such as bit rate of transmission, the number of packets lost and or inserted, jitter delays and the like. Conventional performance measurement techniques fall into two categories: one is active and the other is passive. Passive techniques involve examination of network traffic, and including packet and byte counts for packet matching, packet histograms and stateful measurements such as average packet and data rate measurements. Passive techniques however, are limited to measurements taken at a single point. Further, the measurements involve storage of data obtained at multiple points in the network.

Document US 2009113070 discloses a system for testing of connectivity between two provider edge routers. At a provider edge (PE) router, a link trace message (LTM) is received. A multi-protocol label switching (MPLS) trace session is initiated at the PE router. A MPLS trace message is generated based on the LTM message, where the MPLS trace message is sent to a set of MPLS nodes along a path between two Ethernet nodes within a MPLS network. A link trace reply (LTR) message is generated based on the MPLS trace reply messages, and the LTR message is sent to one of the nodes over Ethernet.

Active techniques involve modifying existing packet traffic or injecting test traffic information from one device to another and including enough information in the test packets. The drawback associated with the active techniques is that a lot of network bandwidth is consumed. Further, the user needs to statically configure the end devices so as to start the test manually. The user has to configure the devices using a command line interface or using a network management system. Using a command line interface is a tedious process as the user is required to write appropriate codes. In addition, the user has to manually start the test, then consolidate the data, and conduct the test. Once the test is conducted, the user has to manually remove the configuration.

In addition, existing mechanisms do not have any means to determine the capability information of the end devices. In an example, if a device wants to transmit data packets to another device there is no means to determine if the receiver device has the capability to support the data for the specific type of the test that the user would like to conduct. Further, there is no synchronization between end devices and hence determination of the capability information becomes difficult. Also, a network management system has to be provided with additional logic to carry out the tests. Users are required to configure test parameters separately for every test conducted on provider edge devices. The process is usually time consuming and tedious. Further, some network management systems employ static configuration of the network devices to determine the performance of the network devices. Such systems do not take into consideration parameters such as varying traffic rates in the network, latency, jitter, loss rates with time variation and so on. As a result, the results obtained are approximations as they would not be helpful in determining the dynamic characteristics of the devices under different situations.

In addition, in such cases when a new device needs to be added into the network the settings at one or more components of the network had to be reconfigured to incorporate the new device. Further, some mechanisms may also require additional software for incorporating the new device. Also, addition of the new devices' information on the configuration file will not make user interface applications aware of the existence of the device. Hence, the user interface application must be loaded with new software of the existence of the new device. Configuration of the new devices for incorporating the new device in intermediate stages of a test would be difficult. As a result of the aforementioned drawbacks, it has not been possible for satisfactory results in determination of the performance characteristics of network devices.

### SUMMARY

The invention is defined by the independent claims.

Furher embodiments are defined by the dependent claims.

These and other aspects of the embodiments herein will be better appreciated and understood when considered in conjunction with the following description and the accompanying drawings.

### BRIEF DESCRIPTION OF THE FIGURES

The embodiments herein will be better understood from the following detailed description with reference to the drawings, in which:
FIG. 1 illustrates the architecture of the metro Ethernet environment, according to an embodiment as disclosed herein;
FIG. 2 illustrates a Network Management Module (NMM), according to an embodiment as disclosed herein;
FIG. 3 illustrates a provider edge device, according to an embodiment as disclosed herein;
FIG. 4 is a sequence diagram indicating the test process in metro Ethernet environment, according to an embodiment as disclosed herein; and
FIG. 5 is a flow chart depicting the test process in metro Ethernet environment, according to an embodiment as disclosed herein.

### DETAILED DESCRIPTION OF EMBODIMENTS

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

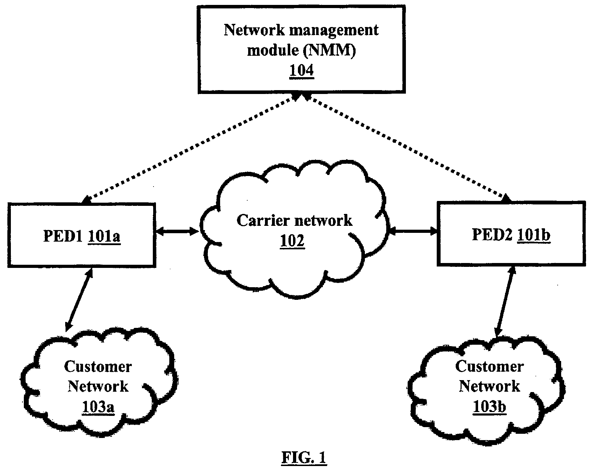

Embodiments herein disclose a mechanism for dynamically configuring test parameters in metro Ethernet device by providing systems and methods therefore. Referring now to the drawings, and more particularly to FIGS. 1 through 5, where similar reference characters denote corresponding features consistently throughout the figures, there are shown embodiments.

A mechanism for dynamic configuration of devices in a metro Ethernet environment is disclosed. The devices may be provider edge devices such as a network switch, router, gateways, and integrated access devices and so on. The mechanism employs a method in which intelligent modules are employed in the components of the metro Ethernet environment. In an embodiment, components refer to Provider Edge Devices (PED) and Network Management Module (NMM), but are not limited to the same. The intelligent modules that reside in the PED, NMM are configured for carrying out tests between the devices. The intelligent module that resides in the NMM is referred to as the management module as it is involved in the process of managing the tests carried out on the PED. The intelligent modules in the PEDs are referred to as configuration modules as they are involved in configuration of the test parameters when a test is to be conducted between the PEDs.

When a test is to be conducted between two PEDs, the devices must be configured so as to support the test parameters. In addition, it is also necessary to determine if the capabilities sent by one PED is supported by another PED so that the PEDs may be synchronized and hence test parameters may be successfully transmitted between the same. During the beginning of a test, an initiator PED sends its configuration details to a receiver PED. The initiator PED then waits for a response from the receiver PED for the capability information. On obtaining a capability packet from the receiver PED, the initiator PED determines if the data or the test parameters to be sent to the receiver PED are supported by the receiver PED. If the receiver PED supports the capabilities, the two devices (initiator and receiver) are synchronized. Further, test parameters are transferred by the initiator PED and the test is conducted. The results of the test may be sent to the initiator PED and the initiator PED then consolidates the test statistics. During consolidation, the initiator PED makes a check of the data received at the receiver PED, traffic parameters, bandwidth of the network link used for transmission, the performance characteristics of the network such as latency, packet loss and the like. The initiator PED then removes its configuration and informs the test entity of the test results. The method allows automation of the test process. Further, synchronizing the test devices by determining their capabilities helps to ensure that the test parameters are supported by the receiver PED and thus the test is successfully completed.

FIG. 1 illustrates the architecture of the metro Ethernet environment, according to an embodiment as disclosed herein. The embodiment herein depicts a test scenario for metro Ethernet environment that comprises of provider edge devices 101a, 101b, carrier network 102, customer network 103a, 103b and a network management module 104.

The PEDs 101a, 101b include devices in the network that act as entry points or access points for the network. The PEDs 101a, 101b include devices such as routers, gateways, switches, integrated access devices, multiplexers and so on. Under a test scenario, there must be at least two PEDs 101a and 101b; one to initiate the test called initiator PED test device and the other receiver PED test device. The PEDs are provided with intelligent modules within them called as the configuration modules for performing the test automatically with manual configuration required from the user. The configuration module in the initiator PED triggers the test and sends a discovery message to the receiver PED. The configuration module also sends its configuration details and requests for the capability information from the receiver PED. The configuration module within the receiver PED is responsible for sending its capability information in the capability packet sent to the initiator PED. Capability information provides details on the configuration of the receiver PED, the type of packets and data supported by the receiver PED and the like.

The carrier network 102 acts an intermediate network between the PED1 101a and PED2 101b. All the communication between the two devices PED1 101a and PED2 101b happens through the carrier network 102. When the PED 1101a would like to configure parameters of PED2 101b or send its own configuration parameters to the PED2 101b, PED1 101a interacts with the carrier network 102 to send the parameters. The carrier network 102 enables seamless transmission of the data obtained from any of the service provider network's through the PEDs to the other service provider network or to another PED located within the same service provider network.

The customer network 103a, 103b represent any service provider network that is serving the PED devices 101a, 101b of a user. In an embodiment, the customer network 103a, 103b may belong to the same service provider or to different service providers. In an example, the customer network 103a may service PED1 101a and the customer network 103a may be connected through the user-to-network interface. Similarly, the customer network 103b may be servicing PED2 101b. Further, the PED devices may be connected to the carrier network 102 through network-to-network interface.

The NMM 104 monitors and administers the network for efficient management of the network system. The NMM 104 is responsible for identification of problems in the network, the exact source of the problem in the network and solving the problems. The NMM 104 is also responsible for collecting the statistics of the devices such as PEDs 101a, 101b and so on over a period of time. In an embodiment, the NMM 104 may also include a library where the previous network statistical data over a period of time is stored along with the problems and the solutions that worked in the past. In addition, the NMM 104 also performs configuration management wherein configuration aspects of network devices are carried out such as configuration file management, inventory management, and software management. The NMM 104 also monitors and measures various aspects of performance so that the overall performance can be maintained at an acceptable level.

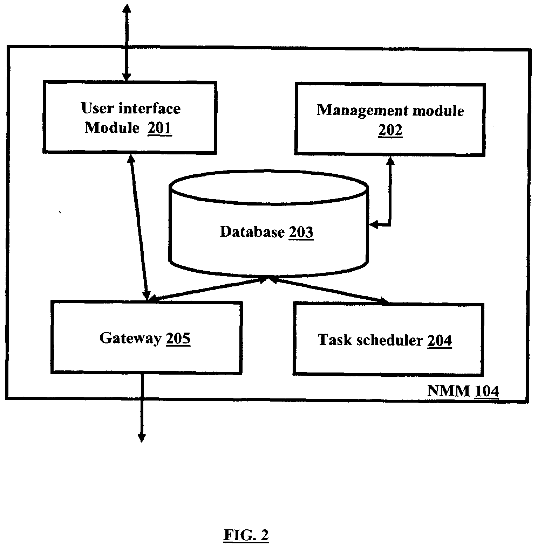

FIG. 2 illustrates a Network Management Module (NMM), according to an embodiment as disclosed herein. The NMM 104 is responsible for handling the process of conducting tests on the network devices. The NMM 104 initiates the test by sending a test start signal to an initiator device. Once the test is initiated, the NMM 104 monitors the entire process until the test is over. During the process, if there are instances where the test cannot be performed anymore, then the NMM 104 issues appropriate control signals to the PEDs and the test is aborted. In an embodiment, instances include cases where there is mismatch in the configurations of the PED1 101a, PED2 101b or if the test parameters of PED1 101a are not supported by PED2 101b and the like. In such cases, the NMM 104 may take action to abort the test.

The NMM 104 comprises a user interface 201, a management module 202, a database 203, a gateway 204 and a task scheduler 205. In an embodiment, the NMM 104 may also include additional components to perform additional functions supported by the NMM 104 as per the requirements.

The user interface 201 acts as the first point of contact to the NMM 104. The user interface 201 allows the users to interact with the network components. When any request is received from the user, say a request for the configuration details of the PED under test or the like, the user interface 201 receives the request. The user interface 201 then processes the request and sends it to the appropriate module to be handled.

The management module 202 initiates the test process, determines if there are any faults in the network, and also takes corrective measures so that the performance of the network is within the acceptable levels. In case of a test scenario, the management module 202 issues control signals to initiate the test process, the control signal may be sent to the initiator PED1 101a. Further, the management module 202 aborts the test in case it does not obtain a response from the receiver PED2 101b. The management module 202 may also send an abort to the initiator PED1 101a if there is mismatch in the test parameters, capabilities, configuration of the receiver PED2 101b. The management module 202 generates a TRAP on aborting a test using which it determines the error points in the test.

The database 203 may store information on the performance of the network, the parameters configured for the PEDs, capability information and so on. The database 203 may also store information on the errors in the network and the location of such errors.

The task scheduler 204 is responsible for scheduling the tasks of the components of the NMM 104. The task scheduler 204 configures the test process for the PEDs and schedules automated test processes.

The gateway 205 acts as a means to route any information through and from the NMM 104. All the requests and responses are routed from the gateway 205 to different components within the NMM 104 or outside the NMM 104.

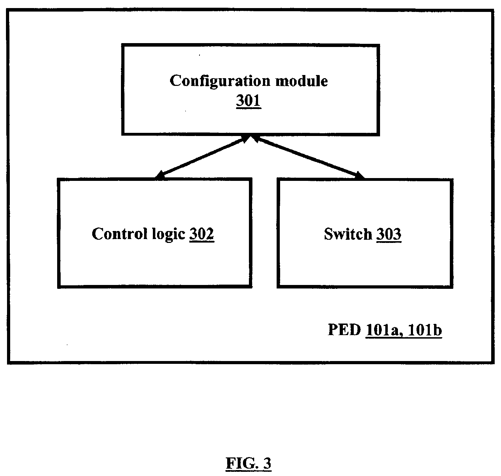

FIG. 3 illustrates a provider edge device, according to an embodiment as disclosed herein. The provider edge device that initiates a test is referred to as the initiator provider edge device PED1 101a. After initiation of the test, the initiator PED 1 101a sends its configuration details to the receiver PED2 101b and waits for the capability information from the receiver PED2 101b. On obtaining the capability packet from the receiver PED2 101b, the initiator PED1 101a determines if the configuration details are supported by the receiver PED2 101b. In case the capabilities are not supported by the receiver PED2 101b, the test is aborted by sending a TRAP to the NMM 104. If the capabilities are supported by the receiver PED2 101b the test is continued.

The initiator PED1 101a comprises of different sub-modules for enabling the functionality of the PED1 101a. The modules include but are not limited to a configuration module A 301, control logic 302 and a switch 303.

The configuration module A 301 is responsible for automation of the test process. The service provider or the NMM 104 needs to only configure the initial process for setting up the test such as sending a test start signal or test parameters signal to the PED and the like. The remaining test process is automatically handled by the PEDs involved in the test. The configuration module A 301 sends the configuration along with the capability information to the PED2 101b through the switch 303. The configuration module 301 determines if the PED2 101b is capable of supporting the test parameters and the configuration of the PED 1 101 a. The configuration module 301 also sends intimation to the control logic to send a signal for setting the timer and starting a retry count. In addition, the configuration module 301 consolidates the data on obtaining the test results from the PED2 101b. During consolidation, the configuration module 301 may check for the rate of transmission, loss of packets and jitter effects and the like.

The control logic 302 is responsible for controlling the functions of the other sub-modules within the PED. The control logic 302 issues control signals to configuration module 301 and the switch 303. In addition, the control logic 302 may also issue signals for generation of the TRAP on failure of the test, or when there is mismatch in the configuration of the test parameters under test scenario.

The switch 303 acts as a router to route any messages and requests to and from the PED. The switch 303 directs the responses and requests to the module to which it is addressed within the PED.

In an embodiment, PED2 101a may also function as an initiator PED. In such a case, PED2 101b will take up the functioning of the PED 1 101a.

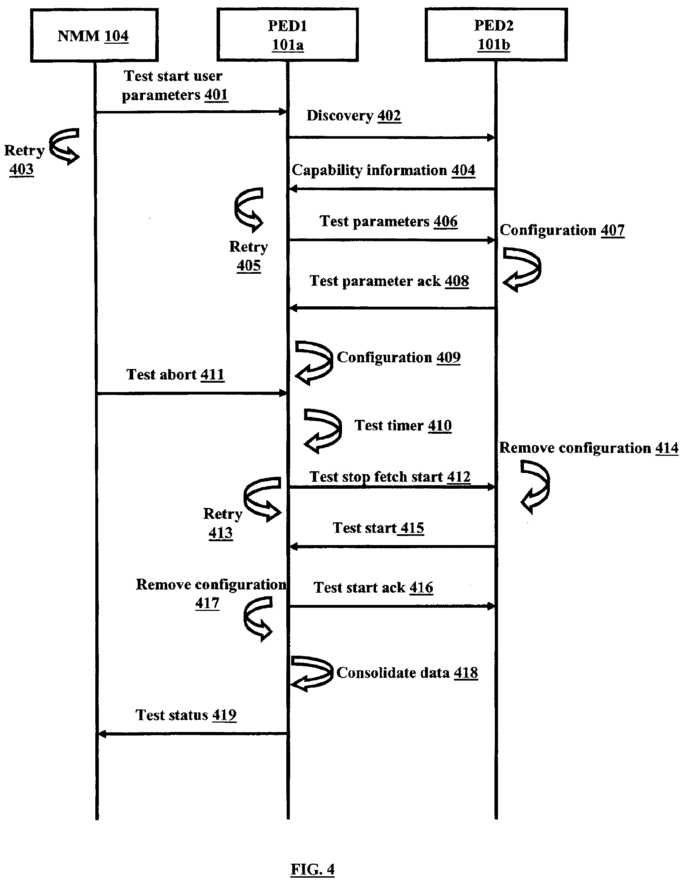

FIG. 4 is a sequence diagram indicating the test process in metro Ethernet environment, according to an embodiment as disclosed herein. A test scenario is considered and the test devices involved are PED1 101a and PED2 101b. The PED1 101a acts as an initiator of the test and PED2 1101b acts as a receiver of the test. In an embodiment, PED1 101a and PED2 101b may act as receiver and initiator respectively. The NMM 104 initiates (401) the test process by sending a test start signal to the PED1 101a. The PED1 101a then sends (402) a discovery signal to the PED2 101b. The discovery signal may be used to detect the PED2 101b that acts as a receiver in the test. The PED2 101b on obtaining the discovery signal determines if its capability parameters suite that of the PED1 101a. The PED1 101a then waits for a capability Protocol Data Unit (PDU) from the PED2 101b. During this period, a timer may be set with a pre-configured time interval with a pre-configured count. In an embodiment, the default count may be 3 with an interval of 1 second. Further, the count and the interval of the timer may be configured by a service provider through the customer network 103. If there is no response (capability PDU) received form PED2 101b for a time period after the discovery is sent, then NMM 104 may be informed of the same by sending a TRAP signal and the test may be aborted. A retry may be set (403) and the process may be repeated. The PED2 101b sends (404) a capability PDU to PED1 101a. On obtaining capability PDU, the PED1 101a determines if the capabilities are supported by the PED2 101b and the configuration details match that of PED2 101b. Further, the timer and counters may be stopped. If there is mismatch in the capability information, the test may be aborted and a retry may be generated (405). Once it is determined that PED2 101b supports the capabilities of PED1 101a, the PED1 101a sends (406) test parameters to PED2 101b. Test parameters may include details such as bandwidth of the link, type of traffic and the like. On receiving the test parameters, PED2 101b configures (407) itself to suite the capabilities of PED1 101a. Meanwhile, PED1 101a waits for a response from the PED2 101b for the test parameters sent. If there is no response obtained, a retry signal is set and the process is repeated. Further, the PED2 101b sends (408) an acknowledgment for the test parameters to the PED1 101a. On receiving the test parameter acknowledge, the PED1 101a configures (409) itself and a test timer may be started (410). In case if test parameter 'non acknowledgment' is received, the NMM 104 may be intimated and the test is aborted (411) by sending a TRAP signal or the like. At PED1 101a when the test timer expires, the user gives a forced abort and sends (412) the test stop fetch start protocol data unit to the PED2 101b with a retry mechanism (413). On obtaining the test stop fetch start PDU, the PED2 101b removes (414) its configuration. Further, PED2 101b sends (415) information in the test statistics PDU to the PED1 101a. Test statistics may comprise of details such as test results, performance characteristics, information on the data received and so on. On obtaining test statistics, the PED1 101a sends (416) an acknowledgement to the PED2 101b. The PED1 101a then removes (417) its own configuration and consolidates (418) its own statistics along with the received test statistics. During consolidation, a check may be made of the jitter effects, packet loss, rate of transmission and the like. The PED1 101a then informs (419) the NMM 104 about the test statistics. The various actions in method 400 may be performed in the order presented, in a different order or simultaneously. Further, in some embodiments, some actions listed in FIG. 4 may be omitted.

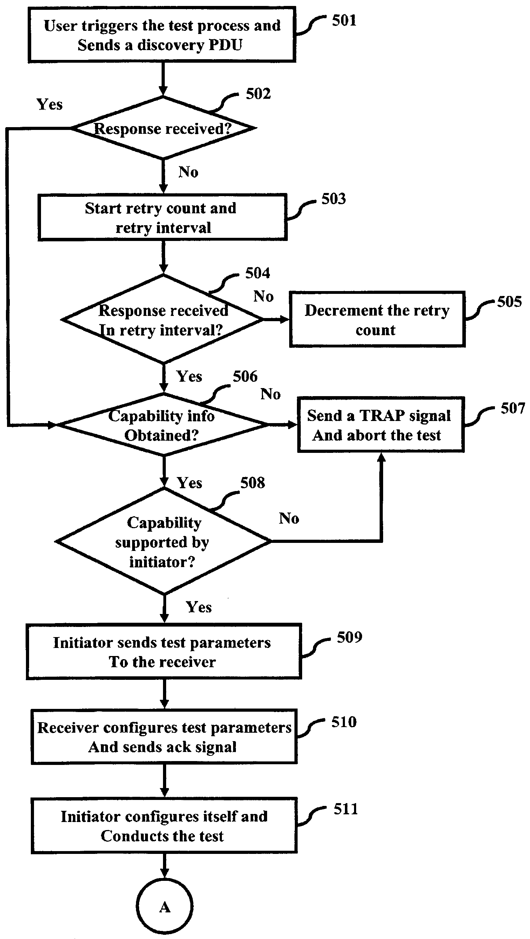

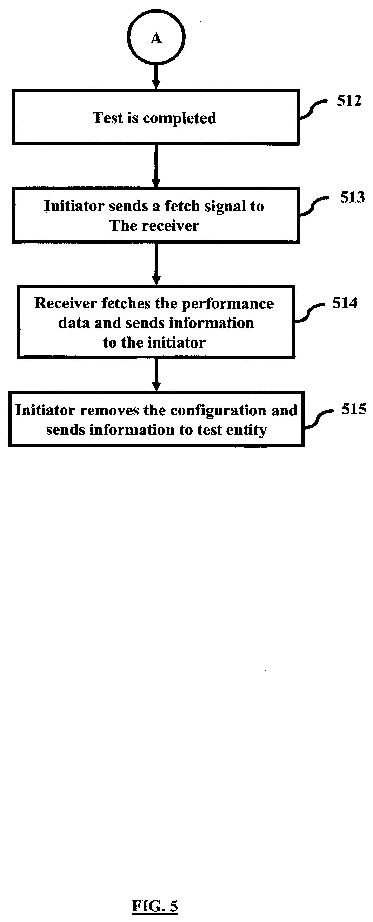

FIG. 5 is a flow chart depicting the test process in metro Ethernet environment, according to an embodiment as disclosed herein. The PED1 101a triggers (501) a test and sends a discovery PDU to the PED2 101b. The test may be triggered through the NMM 104. The PED1 101a then waits for a response from the receiver PED2 101b. A check is made (502) if a response is obtained. In case there is no response obtained for the discovery PDU then a timer may be started (503). The timer may include a retry count with a retry interval. In an embodiment, the default value of count is 3 and default interval is 1 second. In addition, the values of count and interval may be configured by a service provider. Further, a check is made (504) if a response is obtained for the discovery PDU. In case the response is not obtained, the count may be decremented (505). On the other hand, if the response is obtained a check is made (506) if capability information is obtained in the PDU. If the capability information of PED2 101b is not obtained, a TRAP may be sent to the NMM 104 and the test may be aborted (507). In case capability information is obtained, a check may be made (508) if the capabilities are supported by PED2 101b. If capability is not supported by PED2 101b then the process moves to step 507. If capability information is supported, the PED1 101a sends (509) test parameters to PED2 101b. On obtaining the test parameters, the PED2 101b configures (510) itself and sends an acknowledgment signal for the test parameters. The PED1 101a then configures (511) itself for the test and conducts the test by starting the test timer. Further, after the test duration is completed and the test timer expires, PED1 101a gives a forced abort. The test is then completed (512). On completion of the test, the PED1 101a sends (513) a test stop fetch start PDU to the PED2 101b. At the receiver side, the PED2 101b fetches the test statistics and sends (514) it to the PED1 101a. The test statistics are then sent (515) to PED1 101a. The PED1 101a sends an acknowledgment signal to PED2 101b, removes its own configuration. The PED1 101a consolidates the test statistics along with its own statistics and then informs the test entity. The various actions in method 500 may be performed in the order presented, in a different order or simultaneously. Further, in some embodiments, some actions listed in FIG. 5 may be omitted.

In an embodiment, the method may be implemented for specific cases such as to transfer data packets between two network devices. In an example, consider data is to be transmitted by the PED1 101a to another PED2 101 b. The PED1 101a initiates the process and sends a discovery PDU to the PED2 101b. When PED2 101b sends the capability PDU the details on the capability information of the PED2 101b is determined. Further, the PED1 101a may send the parameters to PED2 101b. The parameters may include packet flow, the number of packets to be transmitted and so on. The PED1 101a may configure say transmit 500 packets of type A for 10 minutes. Once the parameters are defined, the details may be sent to PED2 101b. The PED2 101b then sends an acknowledgment and the process of data transmission is started by setting a timer. When the timer expires, an acknowledgment may be sent to the PED1 101a and the test abort signal may be set. Later, configuration of PED1 101a, PED2 101b are removed. The results of the process may be sent to PED1 101a. Further, the PED1 101a consolidates the data and sends the results to the NMM 104. During consolidation a check may be made if all the data packets assigned for transmission were successfully transmitted, the packet loss rates, jitter, delay and so on.

In an embodiment, the test across network devices may be automated using the method. In addition, the mechanism may be implemented as a part of Service Level Agreement (SLA) verification. The method dynamically controls the test feature.

The embodiments disclosed herein can be implemented through at least one software program running on at least one hardware device and performing network management functions to control the network elements. The network elements shown in Fig. 1, 2 and 3 include blocks which can be at least one of a hardware device, or a combination of hardware device and software module.

The embodiment disclosed herein specifies a system for dynamic configuration of devices in a metro Ethernet environment. The mechanism allows automation of the test process for determining performance characteristics by dynamic configuration of devices in the network. Therefore, it is understood that the scope of the protection is extended to such a program and in addition to a computer readable means having a message therein, such computer readable storage means contain program code means for implementation of one or more steps of the method, when the program runs on a server or mobile device or any suitable programmable device. The method is implemented in a preferred embodiment through or together with a software program written and being executed on at least one hardware device. The hardware device can be any kind of device which can be programmed including e.g. any kind of computer like a server or a personal computer, or the like, or any combination thereof, e.g. one processor and two FPGAs. Thus, the means are at least one hardware means and/or at least one software means. The method embodiments described herein could be implemented in pure hardware or partly in hardware and partly in software. The device may also include only software means. Alternatively, the invention may be implemented on different hardware devices, e.g. using a plurality of CPUs.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the scope of the claims as described herein.

## Claims

1. A system for measurement of performance characteristics of the link between provider edge devices (101a, 101b) in an Ethernet environment, said system comprising
a network management module (104) configured for
aborting an ongoing test on receiving a signal from a provider edge device (101a); and
receiving test statistics from said provider edge device (101a) on completion of said test;
**characterized in that** said provider edge device (101a) configured for
determining if a second provider edge device (101b) is capable of supporting test parameters configured by said provider edge device (101a), and
synchronizing said provider edge device (101a) with said second provider edge device (101b) for sending said test parameters, if said second provider edge device is determined as being capable of suporting the configured test parameters.

2. The system as in claim 1, wherein said network management module is configured for aborting said test on
determining that there is mismatch in test parameter capabilities of said provider edge devices; and
determining that there is mismatch in test parameters of said provider edge devices.

3. The system as in claim 1, wherein said test statistics include test results, performance characteristics, information of the content transferred to said provider edge device.

4. The system as in claim 1, wherein said provider edge device is configured for sending said test parameter to the second provider edge device, wherein said parameters include bandwidth of the link, type of traffic.

5. The system as in claim 1, wherein said provider edge device is further configured for consolidating data, said data comprising said provider edge device's own statistics, on obtaining test statistics from said second provider edge device on completion of said test.

6. A provider edge device (101a) in an Ethernet environment, where said device is provided with a configuration module, (301) wherein said module is **characterized in that**
determining if a second provider edge device (101b) is capable of supporting the configured test parameters on obtaining a capability packet from said second provider edge device (101b);
synchronizing said provider edge device (101a) with said second provider edge device (101b) for sending said test parameters, if said second provider edge device (101b) is determined as being capable of supporting the configured test parameters; and
sending said test parameters to said second provider edge device (101b) for a pre-configured time.

7. The provider edge device as in claim 6, wherein said configuration module in said device is configured for consolidating data on obtaining test statistics from said second provider edge device on completion of said test.

8. A method for dynamic configuration of provider edge device (101a) in an Ethernet environment, said method **characterized in that**
determining if a second provider edge device (101b) is capable of supporting parameters configured by a provider edge device (101a) on obtaining a capability information from said second provider edge device (101b),
synchronizing said provider edge device (101a) with said second provider edge devices (101b) to transmit test parameters, if said second provider edge device (101b) is determined as being capable of supporting the configured test parameters; and
sending said test parameters to said second provider edge device (101b) for pre-configured time.

9. The method as in claim 8, wherein said provider edge device is configured for consolidating test statistics obtained from said second provider edge device.

10. The method as in claim 8, wherein said test parameters include bandwidth of the link, type of traffic.

11. The method as in claim 8, wherein said test statistics include test results, performance characteristics, information on the data received.

12. A method for measurement of performance characteristics of provider edge devices (101a, 101b) in an Ethernet environment, said environment comprising a network management module (104), plurality of provider edge devices (101a, 101b), carrier network (102) and customer network (103a, 103b), wherein said method is **characterized in that**
determining by said provider edge device (101a) if a second provider edge device (101b) is capable of supporting test parameters configured by said provider edge device (101a);
synchronizing said provider edge device (101a) with said second provider edge device (101b) for sending test parameters, if said second provider edge device (101b) is determined as being capable of supporting the configured test parameters; and
receiving test statistics by said network management module (104) from said second provider edge device (101b) on completion of said test.

13. The method as in claim 12, said network management module is configured for aborting said test on
obtaining a signal from said provider edge device;
determining that there is mismatch in test parameter capabilities of said provider edge devices; and
determining that there is mismatch in test parameters of said provider edge devices.

14. The method as in claim 12, wherein said network management module is configured for receiving said test statistics, wherein said test statistics include test results, performance characteristics, information of the content transferred to said provider edge device.

15. The method as in claim 12, wherein said provider edge device is configured for sending said test parameter, wherein said parameters include bandwidth of the link, type of traffic.

16. The method as in claim 12, wherein said provider edge device is further configured for consolidating data, said data comprising said provider edge device's own statistics, on obtaining test statistics from said second provider edge device on completion of said test.

## Patentansprüche

1. System für die Messung von Leistungscharakteristiken der Verbindung wischen Provider-Edge-Vorrichtungen (101a, 101b) in einer Ethernetumgebung, wobei besagtes System umfasst:
ein Netzwerkverwaltungsmodul (104), konfiguriert für
das Abbrechen eines fortlaufenden Tests auf den Empfang eines Signals von einer Provider-Edge-Vorrichtung (101a) hin, und
den Empfang von Teststatistiken von besagter Provider-Edge-Vorrichtung (101a) nach Abschluss besagten Tests;
**dadurch gekennzeichnet, dass** besagte Provider-Edge-Vorrichtung (101a) konfiguriert ist für:
Bestimmen, ob eine zweite Provider-Edge-Vorrichtung (101b) dazu befähigt ist, Testparameter zu unterstützen, die von besagter Provider-Edge-Vorrichtung (101a) konfiguriert wurden; und
Synchronisieren besagter Provider-Edge-Vorrichtung (101a) mit besagter zweiter Provider-Edge-Vorrichtung (101b) zwecks Sendens besagter Testparameter, sofern für besagte zweite Provider-Edge-Vorrichtung bestimmt wird, dass sie dazu befähigt ist, die konfigurierten Testparameter zu unterstützen.

2. System nach Anspruch 1, wobei besagtes Netzwerkverwaltungsmodul dafür konfiguriert ist, den besagten Test abzubrechen, wenn
bestimmt wurde, dass eine Diskrepanz bei den Testparameterfähigkeiten besagter Provider-Edge-Vorrichtungen besteht; und
bestimmt wurde, dass eine Diskrepanz bei den Testparametern besagter Provider-Edge-Vorrichtungen besteht.

3. System nach Anspruch 1, wobei besagte Teststatistiken Testergebnisse, Leistungseigenschaften sowie Informationen zu den Inhalten enthalten, die an besagte Provider-Edge-Vorrichtung übertragen wurden.

4. System nach Anspruch 1, wobei besagte Provider-Edge-Vorrichtung konfiguriert ist für das Senden besagter Testparameter an die zweite Provider-Edge-Vorrichtung, wobei besagte Parameter die Bandbreite der Verbindung und den Verkehrstyp umfassen.

5. System nach Anspruch 1, wobei besagte Provider-Edge-Vorrichtung weiterhin konfiguriert ist für das Zusammenführen von Daten, wobei die betreffenden Daten nach dem Abrufen der Teststatistiken von besagter zweiter Provider-Edge-Vorrichtung nach Abschluss besagten Tests auch die eigenen Statistiken der Provider-Edge-Vorrichtung umfassen.

6. Provider-Edge-Vorrichtung (101 a) in einer Ethernetumgebung, wobei besagte Vorrichtung mit einem Konfigurierungsmodul (301) ausgestattet ist, wobei besagtes Modul **dadurch gekennzeichnet ist, dass** es konfiguriert ist für:
das Bestimmen, auf das Abrufen eines Befähigungspakets von einer zweiten Provider-Edge-Vorrichtung (101b) hin, ob besagte zweite Provider-Edge-Vorrichtung (101 b) dazu befähigt ist, die konfigurierten Testparameter zu unterstützen,
das Synchronisieren besagter Provider-Edge-Vorrichtung (101a) mit besagter zweiter Provider-Edge-Vorrichtung (101b) zwecks Sendens besagter Testparameter, sofern für besagte zweite Provider-Edge-Vorrichtung (101b) bestimmt wird, dass sie dazu befähigt ist, die konfigurierten Testparameter zu unterstützen.
das Senden besagter Testparameter an besagte zweite Provider-Edge-Vorrichtung (101b) für einen voreingestellten Zeitraum.

7. Provider-Edge-Vorrichtung nach Anspruch 6, wobei besagtes Konfigurationsmodul in besagter Vorrichtung dafür konfiguriert ist, um auf das Abrufen von Teststatistiken von besagter zweiter Provider-Edge-Vorrichtung nach Abschluss besagten Tests hin das Zusammenführen von Daten vorzunehmen.

8. Verfahren für das dynamische Konfigurieren der Provider-Edge-Vorrichtung (101 a) in einer Ethernetumgebung, wobei besagtes Verfahren **dadurch gekennzeichnet, dass** es umfasst:
Bestimmen, auf das Abrufen von Befähigungsinformationen von einer zweiten Provider-Edge-Vorrichtung (101b) hin, ob besagte zweite Provider-Edge-Vorrichtung (101b) dazu befähigt ist, die von einer Provider-Edge-Vorrichtung (101a) konfigurierten Testparameter zu unterstützen,
Synchronisieren besagter Provider-Edge-Vorrichtung (101a) mit besagter zweiter Provider-Edge-Vorrichtung (101b) zwecks Sendens besagter Testparameter, sofern für besagte zweite Provider-Edge-Vorrichtung (101b) bestimmt wird, dass sie dazu befähigt ist, die konfigurierten Testparameter zu unterstützen.
das Senden besagter Testparameter an besagte zweite Provider-Edge-Vorrichtung (101b) für einen voreingestellten Zeitraum.

9. Verfahren nach Anspruch 8, wobei besagte Provider-Edge-Vorrichtung konfiguriert ist für das Zusammenführen der Teststatistiken, die von besagter zweiter Provider-Edge-Vorrichtung abgerufen wurden.

10. Verfahren nach Anspruch 8, wobei besagte Testparameter die Bandbreite der Verbindung und den Verkehrstyp umfassen.

11. Verfahren nach Anspruch 8, wobei besagte Teststatistiken Testergebnisse, Leistungseigenschaften und Informationen zu den erhaltenen Inhalten enthalten.

12. Verfahren für die Messung von Leistungscharakteristiken von Provider-Edge-Vorrichtungen (101a, 101b) in einer Ethernet-Umgebung, wobei besagte Umgebung ein Netzwerkverwaltungsmodul (104), eine Vielzahl von Provider-Edge-Vorrichtungen (101a, 101b) sowie ein Trägernetzwerk (102) und ein Kundennetzwerk (103a, 103b) umfasst und wobei besagtes Verfahren **dadurch gekennzeichnet ist, dass** es konfiguriert ist für:
Bestimmen durch besagte Provider-Edge-Vorrichtung (101a), ob eine zweite Provider-Edge-Vorrichtung (101b) dazu befähigt ist, Testparameter zu unterstützen, die von besagter Provider-Edge-Vorrichtung (101a) konfiguriert wurden;
Synchronisieren besagter Provider-Edge-Vorrichtung (101a) mit besagter zweiter Provider-Edge-Vorrichtung (101b) zwecks Sendens von Testparametern, sofern für besagte zweite Provider-Edge-Vorrichtung (101b) bestimmt wird, dass sie dazu befähigt ist, die konfigurierten Testparameter zu unterstützen.
Empfangen von Teststatistiken von besagter zweiter Provider-Edge-Vorrichtung (101b) durch besagtes Netzwerkverwaltungsmodul (104) nach Abschluss besagten Tests.

13. Verfahren nach Anspruch 12, wobei besagtes Netzwerkverwaltungsmodul dafür konfiguriert ist, den besagten Test abzubrechen, wenn
ein Signal von besagter Provider-Edge-Vorrichtung abgerufen wird;
bestimmt wurde, dass eine Diskrepanz bei den Testparameterfähigkeiten besagter Provider-Edge-Vorrichtungen besteht; und
bestimmt wurde, dass eine Diskrepanz bei den Testparametern besagter Provider-Edge-Vorrichtungen besteht.

14. Verfahren nach Anspruch 12, wobei besagtes Netzwerkverwaltungsmodul dafür konfiguriert ist, die besagten Teststatistiken zu empfangen, wobei besagte Teststatistiken Testergebnisse, Leistungseigenschaften sowie Informationen zu den Inhalten enthalten, die an besagte Provider-Edge-Vorrichtung übertragen wurden.

15. Verfahren nach Anspruch 12, wobei besagte Provider-Edge-Vorrichtung konfiguriert ist für das Senden besagter Testparameter, wobei besagte Parameter die Bandbreite der Verbindung und den Verkehrstyp umfassen.

16. Verfahren nach Anspruch 12, wobei besagte Provider-Edge-Vorrichtung weiterhin konfiguriert ist für das Zusammenführen von Daten, wobei die betreffenden Daten nach dem Abrufen der Teststatistiken von besagter zweiter Provider-Edge-Vorrichtung nach Abschluss besagten Tests auch die eigenen Statistiken der Provider-Edge-Vorrichtung umfassen.

## Revendications

1. Système de mesure des caractéristiques de performance de la liaison entre des dispositifs de frontière fournisseurs (101a, 101b) dans un environnement Ethernet, ledit système comprenant
un module de gestion de réseau (104) configuré pour
interrompre un test en cours suite à la réception d'un signal provenant d'un dispositif de frontière fournisseur (101a) ; et
recevoir des statistiques de test provenant dudit dispositif de frontière fournisseur (101a) à la fin dudit test ;
**caractérisé en ce que** ledit dispositif de frontière fournisseur (101a) est configuré pour
déterminer si un second dispositif de frontière fournisseur (101b) peut prendre en charge des paramètres de test configurés par ledit dispositif de frontière fournisseur (101a) ; et
synchroniser ledit dispositif de frontière fournisseur (101a) avec ledit second dispositif de frontière fournisseur (101b) pour envoyer lesdits paramètres de test, si ledit second dispositif de frontière fournisseur est déterminé comme pouvant prendre en charge les paramètres de test configurés.

2. Système selon la revendication 1, dans lequel ledit module de gestion de réseau est configuré pour interrompre ledit test suite à
la détermination qu'il existe un défaut de correspondance dans les capacités relatives aux paramètres de test desdits dispositifs de frontière fournisseurs ; et
la détermination qu'il existe un défaut de correspondance dans les paramètres de test desdits dispositifs de frontière fournisseurs.

3. Système selon la revendication 1, dans lequel lesdites statistiques de test comprennent les résultats de test, les caractéristiques de performance, des informations sur le contenu transféré audit dispositif de frontière fournisseur.

4. Système selon la revendication 1, dans lequel ledit dispositif de frontière fournisseur est en outre configuré pour envoyer lesdits paramètres de test au second dispositif de frontière fournisseur, dans lequel lesdits paramètres incluent la bande passante de la liaison, le type de trafic.

5. Système selon la revendication 1, dans lequel ledit dispositif de frontière fournisseur est en outre configuré pour consolider des données, lesdites données comprenant les propres statistiques dudit dispositif de frontière fournisseur, suite à l'obtention des statistiques de test provenant dudit second dispositif de frontière fournisseur suite à la fin dudit test.

6. Dispositif de frontière fournisseur (101a) dans un environnement Ethernet, ledit dispositif étant pourvu d'un module de configuration (301), dans lequel ledit module est **caractérisé en ce qu'**il comprend
la détermination de l'existence d'un second dispositif de frontière fournisseur (101b) pouvant prendre en charge les paramètres de test configurés suite à l'obtention d'un paquet de capacité provenant dudit second dispositif de frontière fournisseur (101b) ;
la synchronisation dudit dispositif de frontière fournisseur (101a) avec ledit second dispositif de frontière fournisseur (101b) afin d'envoyer lesdits paramètres de test, si ledit second dispositif de frontière fournisseur (101b) est déterminé comme pouvant prendre en charge les paramètres de test configurés ; et
l'envoi desdits paramètres de test audit second dispositif de frontière fournisseur (101b) pendant une durée préconfigurée.

7. Dispositif de frontière fournisseur selon la revendication 6, dans lequel ledit module de configuration dans ledit dispositif est configuré pour consolider des données suite à l'obtention de statistiques de test provenant dudit second dispositif de frontière fournisseur suite à la fin dudit test.

8. Procédé de configuration dynamique d'un dispositif de frontière fournisseur (101a) dans un environnement Ethernet, ledit procédé étant **caractérisé en ce qu'**il comprend
la détermination de l'existence d'un second dispositif de frontière fournisseur (101b) pouvant prendre en charge les paramètres de test configurés par un dispositif de frontière fournisseur (101a) suite à l'obtention d'informations de capacité provenant dudit second dispositif de frontière fournisseur (101b) ;
la synchronisation dudit dispositif de frontière fournisseur (101 a) avec ledit second dispositif de frontière fournisseur (101b) afin de transmettre les paramètres de test, si ledit second dispositif de frontière fournisseur (101b) est déterminé comme pouvant prendre en charge les paramètres de test configurés ; et
l'envoi desdits paramètres de test audit second dispositif de frontière fournisseur (101b) pendant une durée préconfigurée.

9. Procédé selon la revendication 8, dans lequel ledit dispositif de frontière fournisseur est configuré pour consolider des statistiques de test obtenues dudit second dispositif de frontière fournisseur.

10. Procédé selon la revendication 8, dans lequel lesdits paramètres de test incluent la bande passante de la liaison, le type de trafic.

11. Procédé selon la revendication 8, dans lequel lesdites statistiques de test incluent les résultats de test, les caractéristiques de performance, des informations sur les données reçues.

12. Procédé de mesure des caractéristiques de performance de dispositifs de frontière fournisseurs (101a, 101b) dans un environnement Ethernet, ledit environnement comprenant un module de gestion de réseau (104), une pluralité de dispositifs de frontière fournisseurs (101a, 101b), un réseau de transport (102) et un réseau client (103a, 103b), ledit procédé étant **caractérisé en ce qu'**il comprend
la détermination par ledit dispositif de frontière fournisseur (101a) de l'existence d'un second dispositif de frontière fournisseur (101b) pouvant prendre en charge des paramètres de test configurés par ledit dispositif de frontière fournisseur (101a) ;
la synchronisation dudit dispositif de frontière fournisseur (101 a) avec ledit second dispositif de frontière fournisseur (101b) afin d'envoyer les paramètres de test, si ledit second dispositif de frontière fournisseur (101b) est déterminé comme pouvant prendre en charge les paramètres de test configurés ; et
la réception de statistiques de test par ledit module de gestion de réseau (104) provenant dudit second dispositif de frontière fournisseur (101 b) suite à la fin dudit test.

13. Procédé selon la revendication 12, dans lequel ledit module de gestion de réseau est configuré pour interrompre ledit test suite à
l'obtention d'un signal provenant dudit dispositif de frontière fournisseur ;
la détermination qu'il existe un défaut de correspondance dans les capacités relatives aux paramètres de test desdits dispositifs de frontière fournisseurs ; et
la détermination qu'il existe un défaut de correspondance dans les paramètres de test desdits dispositifs de frontière fournisseurs.

14. Procédé selon la revendication 12, dans lequel ledit module de gestion de réseau est configuré pour recevoir lesdites statistiques de test, lesdites statistiques de test incluant les résultats de test, les caractéristiques de performance, des informations sur le contenu transféré audit dispositif de frontière fournisseur.

15. Procédé selon la revendication 12, dans lequel ledit dispositif de frontière fournisseur est configuré pour envoyer lesdits paramètres de test, dans lequel lesdits paramètres incluent la bande passante de la liaison, le type de trafic.

16. Procédé selon la revendication 12, dans lequel ledit dispositif de frontière fournisseur est en outre configuré pour consolider des données, lesdites données comprenant les propres statistiques dudit dispositif de frontière fournisseur, suite à l'obtention des statistiques de test provenant dudit second dispositif de frontière fournisseur suite à la fin dudit test.
